(19) Europäisches Patentamt / European Patent Office / Office européen des brevets

(11) **EP 4 703 186 A1**

(12) **EUROPEAN PATENT APPLICATION**

(43) Date of publication:
04.03.2026 Bulletin 2026/10

(21) Application number: 25199776.3

(22) Date of filing: **02.09.2025**

(51) International Patent Classification (IPC):
*B60L 53/30* (2019.01)    *B60K 1/04* (2019.01)
*B60L 53/51* (2019.01)    *B60L 53/52* (2019.01)
*B60L 53/80* (2019.01)    *B60S 5/06* (2019.01)
*B65G 15/00* (2006.01)    *B66F 11/04* (2006.01)

(52) Cooperative Patent Classification (CPC):
B60L 53/80; B60K 1/04; B60L 53/30; B60L 53/51;
B60L 53/52; B60S 5/06; B65G 15/00; B66F 11/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: **02.09.2024 PT 2024119673**

(71) Applicant: **Bold Robotics, Lda**
**3030-289 Coimbra (PT)**

(72) Inventor: **PAIS VIEGAS, CARLOS XAVIER**
**3030-508 COIMBRA (PT)**

(74) Representative: **Patentree**
**Edificio Net**
**Rua de Salazares, 842**
**4149-002 Porto (PT)**

(54) **TRAILER FOR BATTERY SWAPPING OF AN ELECTRIC VEHICLE, AND METHOD THEREOF**

(57) The present document discloses a trailer for battery swapping of an electric vehicle comprising: a pair of supporting bases for elevating the electric vehicle; a set of rolling supports for supporting a battery being displaced; a lift table for lifting a battery to a battery slot from the top of the set of the rolling supports and for lowering a battery from the battery slot to the top of the set of the rolling supports; a linear guide rail for guiding horizontally the lift table; a battery for being placed into the electric vehicle; a power charger for charging a discharged battery; a mobile platform for carrying the pair of supporting bases and the linear guide rail; wherein the lift table is placed between the pair of supporting bases; wherein the lift table comprises two side walls configured to push a battery; wherein the vertical distance from the set of rolling supports to the bottom of the electric vehicle is at least the height of the battery; wherein the linear guide rail comprises a threaded rod and motor for moving the lift table. It is further disclosed a method of operation of the trailer.

**Fig. 1**

EP 4 703 186 A1

**Description**

## TECHNICAL FIELD

The present disclosure relates to a trailer for battery swapping of an electric vehicle and respective operation method.

## BACKGROUND

Electric powered machines present several advantages over machines powered by internal combustion engines, as for instance reduced noise, vibrations, and no emissions. For this reason, and due to an increased environmental awareness, electric powered machines, and specifically in the scope of the present disclosure, vehicles, are replacing the ones powered exclusively by internal combustion engines. These changes are affecting a broad spectrum of sectors, not limited to personal transportation, but also commercial and industrial applications, such as for long-distance transportation including electric lorries, trucks, and vans. However, one of the limitations of the current electric vehicles is their autonomy and battery management. In fact, they require an infrastructure to efficiently support their operation, specifically battery charging stations, charging docks and so on. Due to the limited power density of current batteries, electric vehicles often possess limited autonomy, so a distributed network of charging stations is required. While there are many solutions for the installation of fixed electric vehicle support stations, there are currently only a few solutions for mobile and independent support stations for electric vehicles operating in remote and unstructured environments.

Concerning mobile charging stations or devices for electric vehicles (electric vehicle), a few solutions have been proposed, but with limited scope or capabilities. One example of a portable electric vehicle battery charge device is the Blink's IQ 200-M [1]. However such solutions are limited in terms of total electric capacity, charging just enough to give to the electric vehicle some extra miles of autonomy so it can reach a proper charging station, and the inconvenience of a user having to remember to charge the mobile charging device afterwards so it can be used as a backup solution.

An example of a battery swap station is the NIO's Battery Swap Station. This power swapping station debuted at NIO Day 2017 and was first launched at the Nanshan High Tech industrial Park in Shenzhen, China, in May 2018. Ever since then, power swapping has become the most welcomed power solution by NIO users. This station is a large infrastructure, the size of a two car garage, which can hold several batteries and perform multiple battery swaps per day. However, its largest disadvantage is the fact that it is fixed, so it cannot be moved to a certain location on demand quickly satisfying the power supply in a certain region, or remote location. [2]

These facts are disclosed in order to illustrate the technical problem addressed by the present disclosure.

## GENERAL DESCRIPTION

The present disclosure introduces a trailer for battery swapping of an electric vehicle and a respective operating method. Namely, it concerns a trailer configured to autonomously perform battery charging or swapping operations in remote locations, as well as the respective method of operation.

In an embodiment, said trailer comprises a mobile platform for an electric vehicle to be towed by a vehicle, such as a car or truck, or transported by its own means, to a remote location.

Once deployed in the location, it can be used to autonomously charge or swap the battery of electric vehicles. Furthermore, the trailer possesses integrated sensors, such as cameras and a Global Navigation Satellite System (GNSS) module, alarms for security, and internet connection so it can be remotely monitored at all times.

In an embodiment, the internet connection comprises a connection via a cellular network, e.g., 5G, or LoRA network.

In an embodiment, the trailer carries the electric vehicle within until a remote location. The trailer possesses its own solar panels or wind turbines to generate electricity to charge the batteries, thus not depending on any power grid.

In an embodiment, the trailer provides electric power when parked.

In an embodiment, the trailer harnesses electric power while being moved via a solar panel.

The fields of application of the present invention include, but are not limited to:

- Vehicles operating in remote locations, as for instance, all-terrain races, desert rallies and so on;
- Camping in remote locations;
- Field machinery operating in forest areas;
- Heavy machinery operating in construction sites or mines.

In an embodiment, the present solution allows the electric vehicle to be carried or stored inside the battery storage trailer and possesses a structure for protection of all components of the system.

Furthermore, the present solution also allows to install autonomous mechanisms for battery charging or swapping.

The present disclosure relates to a mobile trailer system for charging and swapping electric vehicle batteries, designed for operation in both urban and remote environments. The trailer comprises a mobile platform equipped with supporting bases for elevating a vehicle, a lift table positioned between the bases, rolling supports for battery handling, and a linear guide rail with a threaded rod and motor for controlled displacement. The lift table, which may be a scissor lift, is provided with side walls and motorized alignment pads to ensure accurate battery positioning.

In an embodiment, the trailer may further integrate a power charger with locking means, and may include optical sensors, preferably laser sensors, for detecting and correcting battery misalignment. To achieve independence from external infrastructures, the trailer incorporates renewable power generators, such as solar panels or wind turbines, which may also supply energy to an electric motor for autonomous movement of the trailer.

In an embodiment, connectivity may be achieved through cellular or LoRa-based communication modules, allowing remote monitoring and control, while additional features such as security alarms and GNSS positioning enhance safe operation. The solution is applicable to remote field operations, off-road events, construction sites, mining operations, and camping, where conventional charging infrastructure is unavailable.

An aspect of the present disclosure relates to a trailer for battery swapping of an electric vehicle comprising: a pair of supporting bases for elevating the electric vehicle; a set of rolling supports for supporting a battery being displaced; a lift table for lifting a battery to a battery slot from the top of the set of the rolling supports and for lowering a battery from the battery slot to the top of the set of the rolling supports; a linear guide rail for guiding horizontally the lift table; a battery for being placed into the electric vehicle; a power charger for charging a discharged battery; a mobile platform for carrying the pair of supporting bases and the linear guide rail; wherein the lift table is placed between the pair of supporting bases; wherein the lift table comprises two side walls configured to push a battery; wherein the vertical distance from the set of rolling supports to the bottom of the electric vehicle is at least the height of the battery; wherein the linear guide rail comprises a threaded rod and motor for moving the lift table.

Surprisingly, by combining renewable power generation, precise alignment systems, and autonomous mobility, the trailer enables reliable and independent battery swapping for electric vehicles without reliance on fixed charging stations. The device of the present disclosure may be used in remote field operations, off-road events, construction sites, mining operations, and camping, where conventional charging infrastructure is unavailable. In an embodiment, the trailer comprises at least a pair of motorized pads installed at an end of the lifting table for aligning a charged battery in a battery slot.

In an embodiment, the motorized pads cover a total area of at least 20% of the battery's bottom surface.

In an embodiment, the set of rolling supports are placed next a supporting base or fixed to the interior surface of a supporting base.

In an embodiment, the power charger further comprises locking means for securing a battery.

In an embodiment, the lift table is a scissor lift table.

In an embodiment, the lift table further comprises a set of optical sensors, preferably laser sensors.

In an embodiment, the trailer comprises at least one electrical power generator, preferably a solar panel, a wind turbine, or a combination of these.

In an embodiment, the trailer further comprises a motor, a set of wheels and an axel to drive the set of wheels, preferably the motor is an electrical motor.

In an embodiment, the at least one electrical power generator powers the electrical motor, preferably via a backup battery.

In an embodiment, the mobile platform is towable by a vehicle, preferably via a tow hitch.

It is also disclosed a method of operation of a trailer for battery swapping of an electric vehicle comprising the steps: placing an electric vehicle on top of a pair of supporting bases; rising a lift table up to a vehicle's battery bottom; receiving the battery from the electric vehicle's chassis; lowering the lift table up to the rolling supports level; pushing the vehicle's battery up to an end of the rolling supports; leaving the vehicle's battery at said end; moving the lift table up to the power charger; disconnect a charged battery from the power charger; pushing the charged battery up to a battery slot of the electric vehicle; rising the lift table with the charged battery up to the battery slot of the electric vehicle; engaging the charged battery with the electric vehicle's chassis; lowering the lift table up to the rolling supports level; moving the lift table up to the end of the rolling supports; pushing the battery up to the power charger; charging the battery.

In an embodiment, the method of operation further comprises the steps: moving the two pads synchronously, in the same direction, after the battery is loaded in the lift table and the lift table is in a middle height position; and/or rotating the battery by a fixing pad and moving another pad or moving two pads in opposing directions.

In an embodiment, the method of operation further comprising the steps: detecting the position of the discharged battery on the vehicle's battery bottom in relation to the lift table; if mismatched: aligning the lift table with the discharged battery; receiving the battery from the electric vehicle's chassis; aligning the lift table with the rolling supports; and aligning the lift table with the charged battery to the vehicle's battery bottom.

## BRIEF DESCRIPTION OF THE DRAWINGS

The following figures provide preferred embodiments for illustrating the disclosure and should not be seen as limiting the scope of invention.

**Figure 1:** Schematic representation, in isometric view, of an embodiment of a trailer for battery swapping of an electric vehicle.

**Figure 2:** Schematic representation, in isometric view, of an embodiment of a trailer for battery swapping without a supporting base.

**Figure 3:** Schematic representation of an embodiment of an electric vehicle in an isometric top view (A), and in a posterior ventral right isometric view (B).

**Figure 4:** Schematic representation, in a lateral cross section, of an embodiment of a trailer for battery swapping of an electric vehicle, identifying a frontal position (A), a middle position (B), and a back position (C) of said trailer.

**Figure 5:** Schematic representation of an embodiment of a lift table aligned with a battery of an electric vehicle in a lowered position (A) and in a raised position (B).

**Figure 6:** Schematic representation of an embodiment of a lift table with its side walls in a downright position (A), and in an upright position (B).

**Figure 7:** Schematic representation of an embodiment of an operating method for a trailer for battery swapping (A-J).

**Figure 8:** Schematic representation, in an isometric view (A) and top view (B), of an offset between the trailer's midplane and the electric vehicle's midplane.

**Figure 9:** Schematic representation, in an isometric view (A) and top view (B), of an angular offset between the electric vehicle's midplane axis and the trailer's midplane.

**Figure 10:** Schematic representation of an embodiment of the lift table in a middle position.

**Figure 11:** Schematic representation of an embodiment of the battery's fine positioning system.

**Figures 12A and 12B:** Schematic representation of an embodiment of a trailer for battery swapping of an electric vehicle with solar panels.

## DETAILED DESCRIPTION

Trailer for battery swapping comprising: a battery, a battery charger (i.e, a power charger), a pair of supporting bases, a set of rolling supports, a linear guide rail, a lift table, and a mobile platform.

The present disclosure relates to a trailer for battery swapping and charging of electric vehicles. The trailer comprises supporting bases, rolling supports, a lift table, a linear guide rail, a power charger, and a mobile platform. The lift table allows displacement of discharged and charged batteries between the electric vehicle and the trailer. The trailer further comprises motorized pads for battery alignment, optical sensors for position detection, and renewable energy generators such as solar panels or wind turbines. A corresponding method of operation is also disclosed, enabling autonomous battery swapping and charging in remote environments.

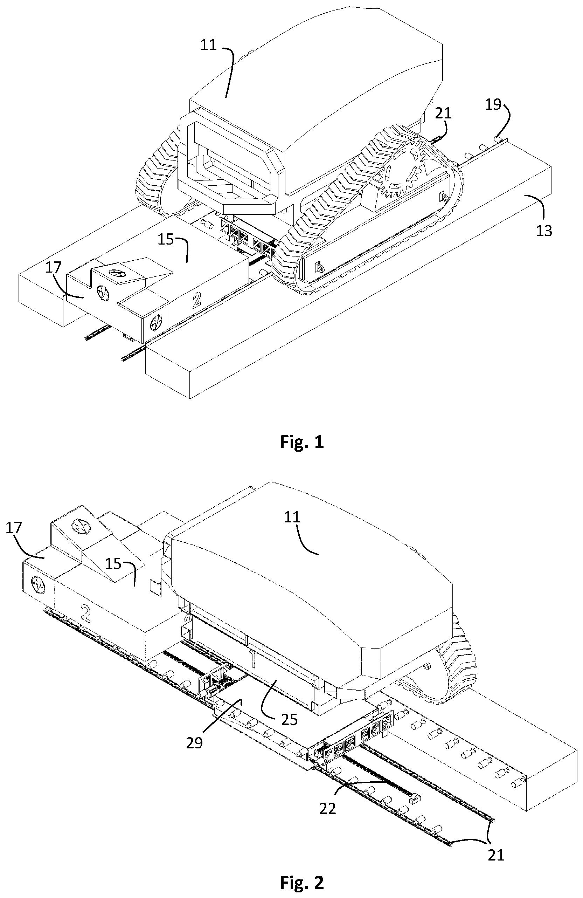

**Figure 1** shows a schematic representation of an embodiment of a trailer for battery swapping where: **11** represents an electric vehicle, **13** represents a supporting base, **15** represents a charged battery, **17** represents a battery charger for charging or securing a charged battery, **19** represents a set of rolling supports, and **21** represents a linear guide rail.

In an embodiment, the battery charger (17) comprises a battery either in charging mode or already charged.

In an embodiment, the battery charger (17) further comprises locking mechanisms for securing a battery.

The supporting bases (13), that offset the electric vehicle from the ground level, allow the battery swapping trailer to reach the batteries placed under an electric vehicle (11), wherein the ground level considered as the bottom of these two bases.

In an embodiment, the set of rolling supports (19) are configured to handle the weight of the batteries rolling on top of them. Thus, their number and distribution depend on their mechanical characteristics and on the battery weight.

In an embodiment, the set of rolling supports (19) are installed in such way that the minimum vertical distance from its rolls to the bottom of the electric vehicle's chassis is larger than the maximum height of the batteries.

In an embodiment, the set of rolling supports (19) are placed next a supporting base (13) or fixed to the interior surface of a supporting base (13).

**Figure 2** shows a schematic representation, in isometric view, of an embodiment of a trailer for battery swapping without a supporting base, wherein (11) represents an electric vehicle, (15) represents a charged battery, (17) represents a charger, (21) represents a linear guide rail, (22) represents a threaded rod, (25) represents a discharged battery, and (29) represents a lift table.

In an embodiment, the discharged battery (25) and the charged battery (15) comprise equal geometric characteristics.

In an embodiment, the charged battery (15) is the battery to be swapped in the electric vehicle, and the discharged battery (25) is the battery that is to be charged by the charger (17).

In an embodiment, the lift table (29) is installed on top of a pair of linear guide rails (21), thus allowing for the horizontal movement of the lift table (29).

In an embodiment, the lift table is a scissor lift table.

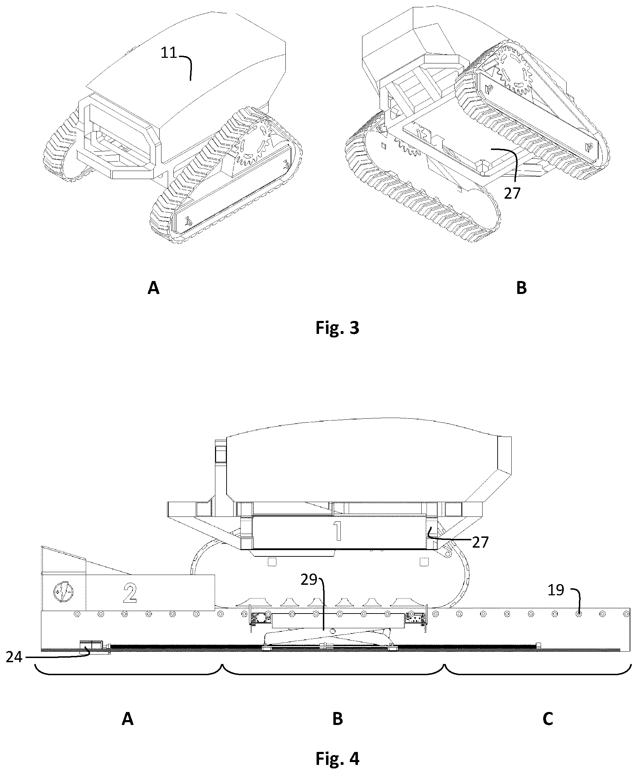

**Figure 3** shows a schematic representation of an embodiment of an electric vehicle in an isometric top view (A), and in a posterior ventral right isometric view (B), wherein (11) represents an electric vehicle, and (27) represents a battery slot where the battery is to be lodged.

**Figure 4** shows a schematic representation, in a lateral cross section, of an embodiment of a trailer for battery swapping of an electric vehicle, identifying a front position (A), a middle position (B), and a back position (C) of said trailer, wherein (19) represents a set of rolling supports, (24) represents a motor, (27) represents a battery slot, and (29) represents a lift table.

In an embodiment, the threaded rod (22) is activated by the motor (24) to move the lift table (29) horizontally.

In an embodiment, the lift table (29) is configured for lifting a battery to the battery slot (27) from the top of the set of the rolling supports (19), or for lowering a battery from the battery slot (27) to the top of the set of the rolling supports (19).

In an embodiment, the lift table (29) moves horizontally throughout the front position (A), the middle position (B), i.e., under the electric vehicle, and the back position (C) of said trailer, independently of its height and configuration.

In an embodiment, if a battery is in the front position (A), i.e., in the charger (17), it is either charging or already charged; if it is in the middle position (B), it can be either on the rolls or on the lift table between the rolls and the electric vehicle or inserted in the electric vehicle; and if it is in the back position (C), it is on the rolls.
The electric vehicle is in a fixed in position.

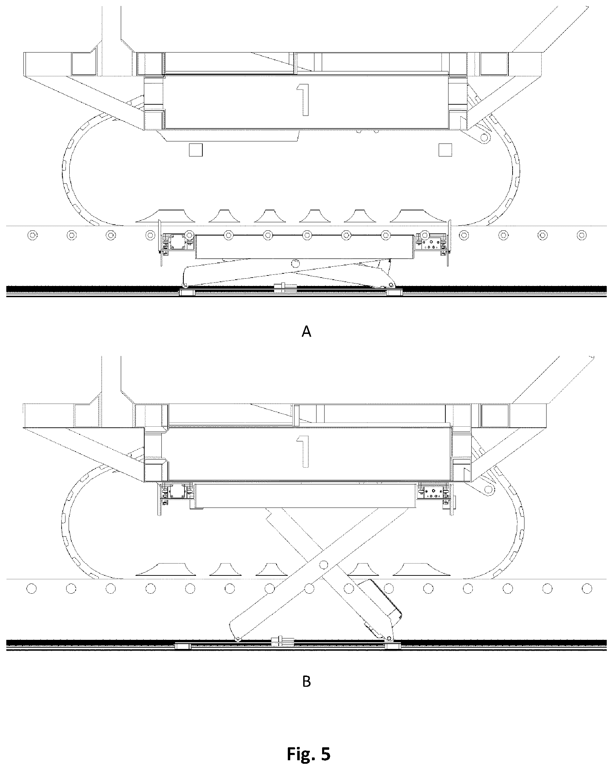

**Figure 5** shows a schematic representation of an embodiment of a lift table aligned with a battery of an electric vehicle in a lowered position (A) and in a raised position (B).

In an embodiment, the lowered position is defined as having the surface of the battery's fine positioning system at a height slightly under the top of the rolls.

In an embodiment, the raised position is defined as having the surface of the battery's fine positioning system at the same height as the bottom of the electric vehicle's chassis.

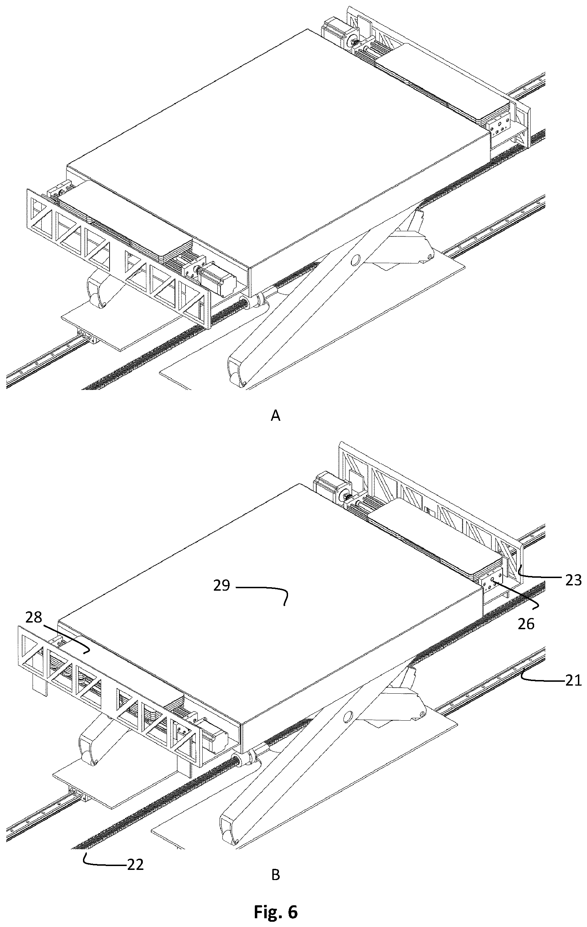

**Figure 6** shows a schematic representation of an embodiment of a lift table with its side walls in a downright position (A), and in an upright position (B), wherein (21) represents a linear guide rail, (22) represents a threaded rod, (22) represents, (23) represents a side wall for pushing a battery, (26) represents a battery's fine positioning system, (28) represents a pad of the battery's fine positioning system, and (29) represents a lift table.

In an embodiment, the side walls (23) of the lift table (29) are configured for pushing a battery.

In an embodiment, the lift table's base comprises a fixed nut for a threaded rod to push the lift table (29) along its horizontal axis.

In an embodiment, the battery's fine positioning system (26) comprises a pair of motorized pads (28) installed at two ends of the lifting table (29), capable of withstanding at least half of the battery's total weight.

In an embodiment, the battery's fine positioning system (26) moves the pads (28) uniaxially, with a great degree of precision, in order to align a charged battery (15) in a battery slot (27).

In an embodiment, the pad of the battery's fine positioning system (26) covers a total area of 20% or more of the electric vehicle battery's bottom surface.

In an embodiment, a side wall (23), which is installed next to the battery's fine positioning system (26), comprises a motor for the wall to slide vertically. Wherein the lowest position to be having its pad at the same or lower height than the pad of the battery's fine positioning system.

In an embodiment, both the battery's fine positioning system (28) and the side wall (23) are fixed to the lift table (29) through an extension piece.

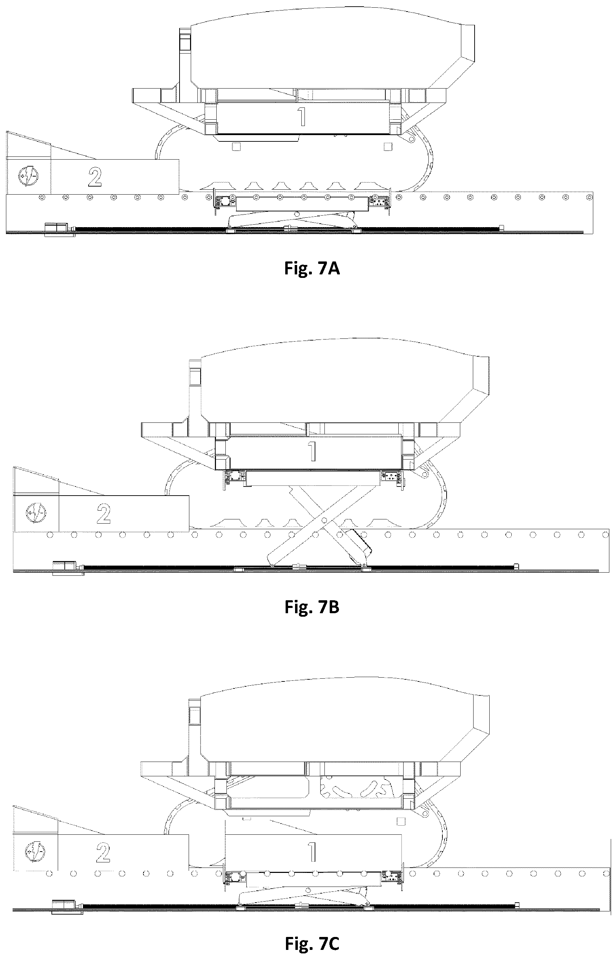

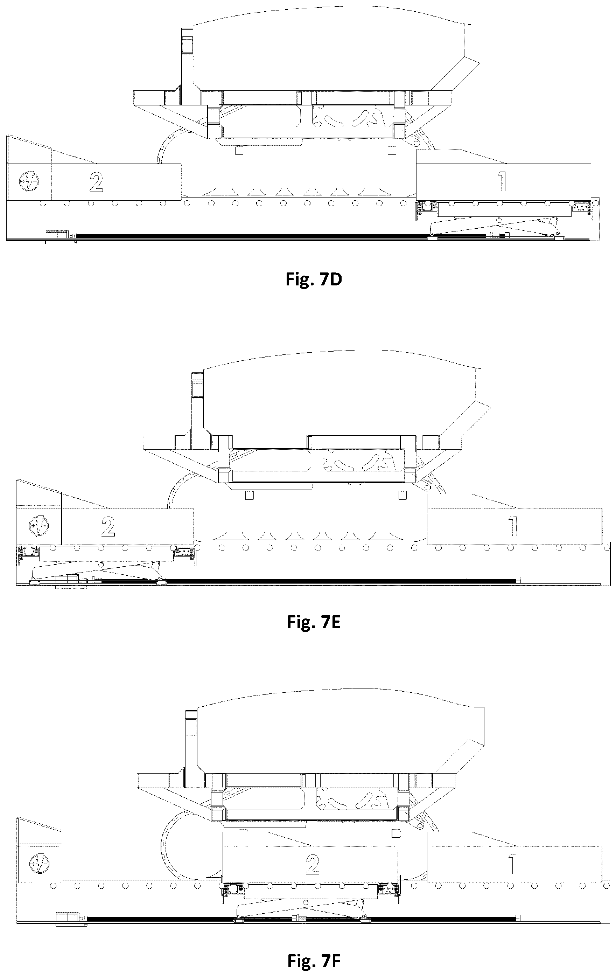

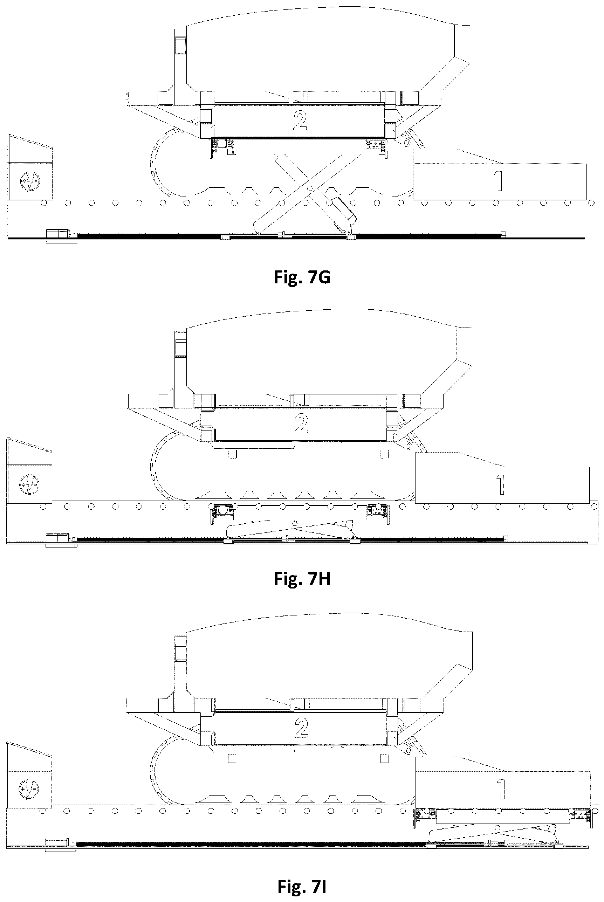

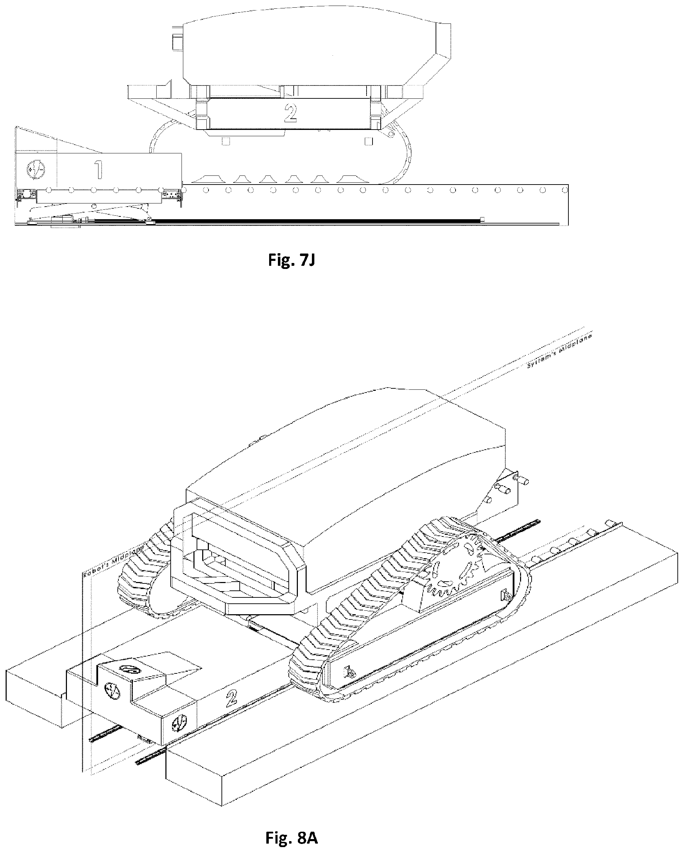

**Figure 7** shows a schematic representation of an embodiment of an operating method for a trailer for battery swapping (A-J).

In an embodiment, a swapping battery method comprising the steps:

- an electric vehicle is placed, or moves on top of the trailer until it reaches position (A);
- the lift table rises up to the discharged battery bottom for receiving the discharged battery from the electric vehicle's chassis (B);
- the lift table lowers itself up to the rolls level (C);
- the lift table moves and leaves the discharged battery to a back position of the trailer (D);
- the lift table moves itself up to the front position of the trailer and engages with a charged battery (E);
- the lift table moves the charged battery up to a battery slot of the electric vehicle (F);
- the lift table disengages with the charged battery (G);
- the lift table lowers itself up to the rolls level (H);
- the lift table moves itself up to the back position of the trailer and engages with the discharged battery(I);
- the lift table moves the discharged battery to the front position of the trailer for charging (J).

In an embodiment, the trailer sends a signal for the vehicle to release the discharged battery.
In another embodiment, the lift table disengages the discharged battery bottom from the electric vehicle's chassis (B).
Table 1 - Steps to take for the operation of exchanging the batteries, wherein n/c represents a no change from a previous step, A represents a front position, B a middle position, and C a back position.

| Status | Discharged Battery (25) | | Charged Battery (15) | | Lift Table (29) | | Side Walls |
| --- | --- | --- | --- | --- | --- | --- | --- |
| | Horizontal Position | Vertical Position | Horizontal Position | Vertical Position | Horizontal Position | Vertical Position | |
| Initial | B | High | A | Low | B | Low | High |
| 1st Step | n/c | n/c | n/c | n/c | n/c | High | Low |
| 2nd Step | n/c | Low | n/c | n/c | n/c | Low | High |
| 3rd Step | C | n/c | n/c | n/c | C | n/c | n/c |
| 4th Step | n/c | n/c | n/c | n/c | n/c | n/c | Low |
| 5th Step | n/c | n/c | n/c | n/c | A | n/c | n/c |
| 6th Step | n/c | n/c | n/c | n/c | n/c | n/c | High |
| 7th Step | n/c | n/c | B | n/c | B | n/c | n/c |
| 8th Step | n/c | n/c | n/c | UP | n/c | UP | Low |
| 9th Step | n/c | n/c | n/c | n/c | n/c | Low | n/c |
| 10th Step | n/c | n/c | n/c | n/c | C | n/c | n/c |
| 11th Step | n/c | n/c | n/c | n/c | n/c | n/c | High |
| 12th Step | A | n/c | n/c | n/c | A | n/c | n/c |

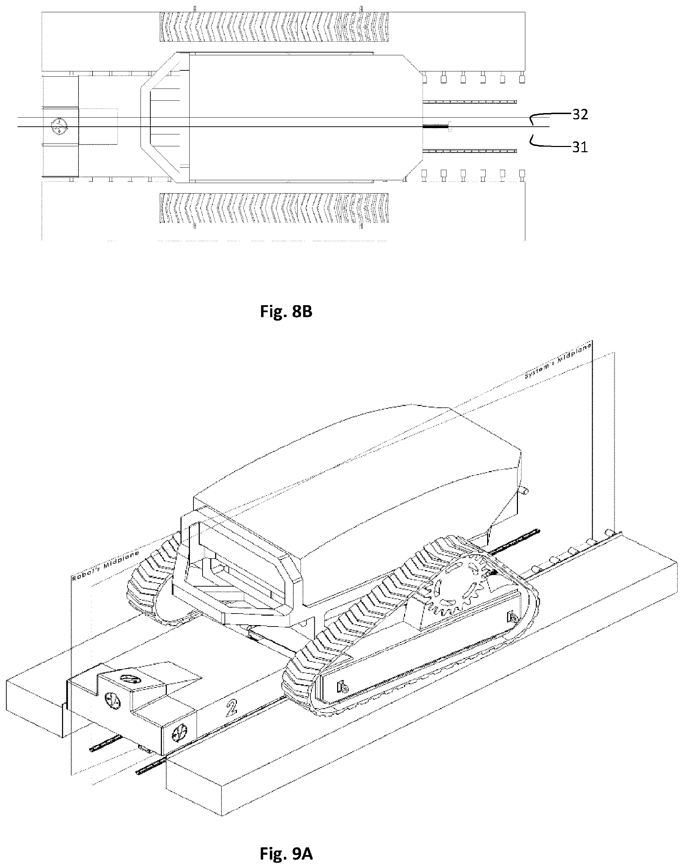

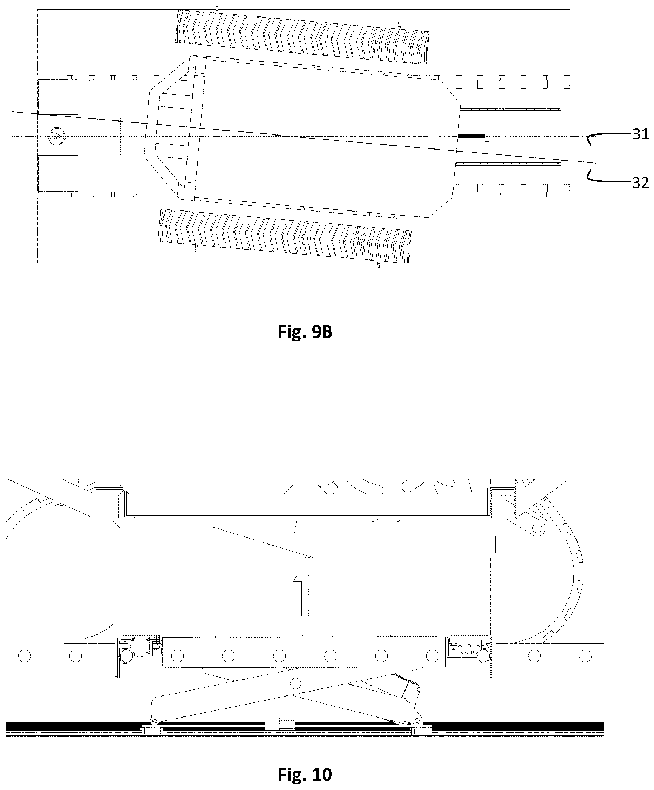

The battery's fine positioning system (26) allows for compensating a realistic admissible margin of error in the electric vehicle's parking position. These misalignments can be of two types, represented on Fig. 8 and Fig. 9.
**Figure 8** shows a schematic representation, in an isometric view (A) and top view (B), of an offset between the trailer's midplane (31) and the electric vehicle's midplane (32).
**Figure 9** shows a schematic representation, in an isometric view (A) and top view (B), of an angular offset between the electric vehicle's midplane (32) axis and the trailer's midplane (31).
These cases, shown in Fig. 8 and Fig. 9, present a challenge for the swapping trailer, since if the discharged battery (25) is not aligned with the system after being retrieved from the electric vehicle (11), it will not fit in the battery's charger (17). Additionally, further in the process, if the charged battery (15) is not aligned with the electric vehicle (11), it will not fit into the battery slot (27). Thus, extra aligning steps of the lift table are needed:

before starting the process, i.e., after an initial state (Fig. 7 A) but before the lift table rises up to the discharged battery bottom (Fig. 7 B);
after retrieving the discharged battery (25) from the electric vehicle (Fig. 7 B) and before laying the battery in the set of rolling supports (19) (Fig. 7 C); and
before lodging a charged battery (15) in the electric vehicle (Fig. 7 G).

In an embodiment, a set of optical sensors, preferably laser sensors, in the lift table is used to obtain the position of the discharged battery relative to the lift table. Then, once the battery is placed on the lift table, through the fine positioning system, the battery is aligned with the table, thus ensuring perfect fit into the charging slot.

**Figure 10** shows a schematic representation of an embodiment of the lift table in a middle position, regardless of its horizontal position, to move the battery using the fine positioning system, the battery must be freely supported by the lift table, i.e. not at the same level of the rolling supports or in contact with any other part of the EV bottom.

To note that in a middle position, the surface of the battery's fine positioning system (28) must be above the set of rolling supports (19), so that the lift table (29) is fully supporting the battery; but that it has to be low enough so that the manoeuvring of the battery does not collide with the electric vehicle.

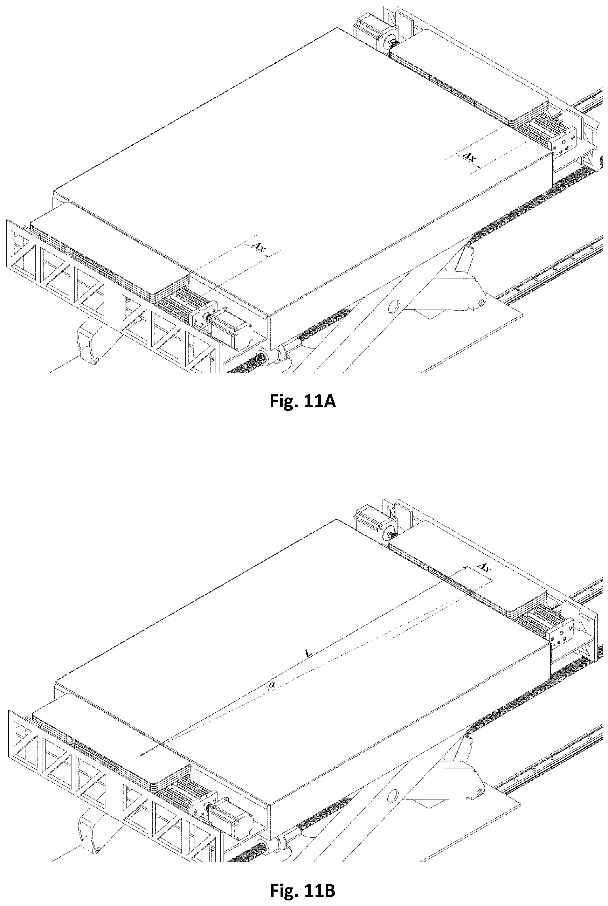

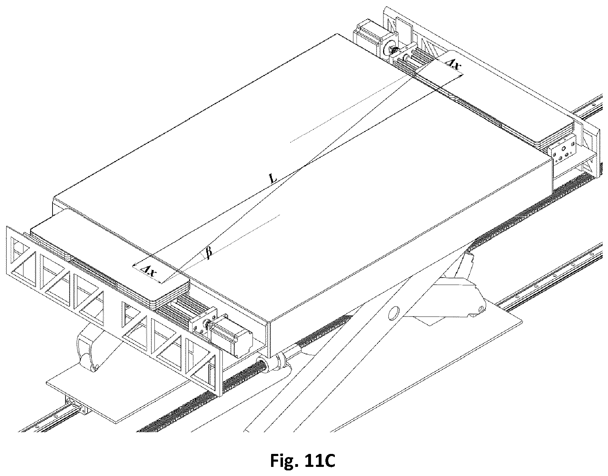

**Figure 11** shows a schematic representation of an embodiment of the battery's fine positioning system, where $\Delta x$ represents an operational distance, i.e., a distance that each one of the pads of the Battery's Fine Positioning System (28) can be displaced, and L represents the centre distance between the two pads of the Battery's Fine Positioning System (28).

The operational distance defines the maximum distance that the Battery's Fine Positioning System (26) moves a battery linearly.

In Fig. 11 B, $\alpha$ is the maximum angle that the Battery's Fine Positioning System is capable of rotate the battery while fixing one of the sides and moving the other. This angle is given by:

$$\alpha = tg^{-1}\left(\frac{\Delta x}{L}\right)$$

In Fig. 11 C, $\beta$ is the maximum angle that the Battery's Fine Positioning System is capable of rotate the battery while moving two pads in opposing directions. This angle is given by:

$$\beta = tg^{-1}\left(\frac{2\Delta x}{L}\right)$$

In an embodiment, to solve these problems, the swapping battery method further comprises the following steps:

if there is a parallel offset between the trailer's midplane and the electric vehicle's midplane (Fig. 8):

move the two pads (28) at the same time, in the same direction, once the battery is loaded in the lift table and the lift table is in a middle height position (Fig. 11 A);

if there is an angular offset between the electric vehicle's midplane axis and the trailer's midplane (Fig. 9):

rotate the battery while fixing one of the pads (28), and moving the other pad (28); or
rotate the two pads (28) moving them in opposing directions.

In an embodiment, with the new steps, based on the premise that the distances between the midplanes of the electric vehicle and the system are fed into the system from an outside source:

Table 2 - Steps to take for the operation of exchanging the batteries, wherein n/c represents a no change from a previous step, A represents a front position, B a middle position, and C a back position.

| Status | Discharged Battery (25) | | Charged Battery (15) | | Lift Table (29) | | Side Walls | Battery's Fine Positioning System |
|---|---|---|---|---|---|---|---|---|
| | Horizontal Position | Vertical Position | Horizontal Position | Vertical Position | Horizontal Position | Vertical Position | | |
| Initial | B | High | A | Low | B | Low | High | Opposite distance from centred position than needed to align the battery with the device |

(continued)

| Status | Discharged Battery (25) | | Charged Battery (15) | | Lift Table (29) | | Side Walls | Battery's Fine Positioning System |
|---|---|---|---|---|---|---|---|---|
| | Horizontal Position | Vertical Position | Horizontal Position | Vertical Position | Horizontal Position | Vertical Position | | |
| 1st Step | n/c | n/c | n/c | n/c | n/c | High | Low | n/c |
| 2nd Step | n/c | n/c | n/c | n/c | n/c | Middle | n/c | Align battery with device |
| 3rd Step | n/c | Low | n/c | n/c | n/c | Low | High | n/c |
| 4th Step | C | n/c | n/c | n/c | C | n/c | n/c | n/c |
| 5th Step | n/c | n/c | n/c | n/c | n/c | n/c | Low | n/c |
| 6th Step | n/c | n/c | n/c | n/c | A | n/c | n/c | n/c |
| 7th Step | n/c | n/c | n/c | n/c | n/c | n/c | High | n/c |
| 8th Step | n/c | n/c | B | n/c | B | n/c | n/c | n/c |
| 9th Step | n/c | n/c | n/c | n/c | n/c | Middle | n/c | Align battery with EV |
| 10th Step | n/c | n/c | n/c | Up | n/c | Up | Low | n/c |
| 11th Step | n/c | n/c | n/c | n/c | n/c | Low | n/c | n/c |
| 12th Step | n/c | n/c | n/c | n/c | C | n/c | n/c | n/c |
| 13th Step | n/c | n/c | n/c | n/c | n/c | n/c | High | n/c |
| 14th Step | A | n/c | n/c | n/c | A | n/c | n/c | n/c |

Mobile and transportable charging trailer for electric vehicles, characterized by having a battery charging mechanism, via a physical connector or contactless through coils.

In an embodiment, said trailer for electric vehicles is further characterized by having a battery swapping or exchange mechanism.

In an embodiment, said trailer for electric vehicles is further characterized by having a structure which provides an enclosure for protection of a vehicle and equipment inside the trailer.

In an embodiment, the enclosure is made of a metal structure in aluminium and composite panels.

In an embodiment, said structure comprises a mobile platform base, to be hauled by another vehicle.

In an embodiment, said trailer comprises its own drive system, comprised of a motor one per wheel, on each side, to do differential drive, a set of wheels and an axel to drive the wheels, preferably the motor is an electrical motor.

In an alternative embodiment, the trailer for battery swapping is permanently attached to a cargo area of a truck, i.e., not detachable from a towing vehicle.

In an embodiment, said structure is characterized by being a standard shipping container, for being transported by a lorry or truck.

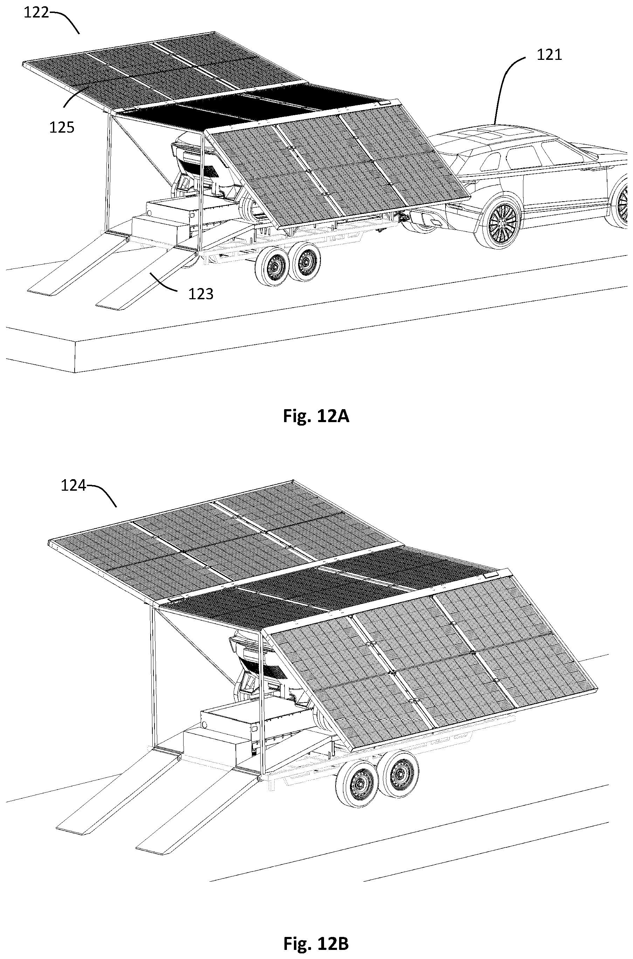

**Figures 12A and 12B** show a schematic representation of an embodiment of a trailer for battery swapping of an electric vehicle with solar panels, wherein 121 represents a towing vehicle, 122 represents a towable trailer, 123 represents a ramp, 124 represents a motorized trailer, 125 represents a set of solar panels.

In an embodiment, said structure is further characterized by being covered with at least one solar panel to generate electricity to charge the discharged electric vehicle batteries, the trailer, the towing vehicle, or a combination of these.

In an embodiment, said structure rotates around its own axis to follow the sun movement, by its own means via an independent motor, e.g. an independent motor on each wheel, or via the movement traction of an external vehicle.

In an embodiment, said structure comprises an alarm by means of motion or proximity detection sensors, thus preventing vandalism or robbery of the trailer structure or its components.

In an embodiment, said structure is characterized by having systems comprised of passive or active tags, visual, UV-light or IR-light based or others, for enabling autonomous alignment of electric vehicles with the trailer. The tags are detected by electric vehicle cameras, so that it is able to estimate with high precision the electric vehicle and trailer relative positions, critical for a successful docking.

In an embodiment, the visual tags serve as indicators for a human driver.

In an embodiment, said trailer comprises wireless communication technologies by means of radio frequency, 5G, LoRA, or others for an internet connection.

In an embodiment, said battery swap or exchange mechanism is characterized by having a vehicle-trailer alignment passive or active system, comprised of visual, IR, UV tags, magnets, or other solutions, to enable a fully autonomous battery exchange operation. Wherein fine alignment is done through active means, e.g., actuators, or passive, e.g., physical constraints or magnets.

In an embodiment, said structure is characterized by having reflective parts or lights for clear visual identification during day or night conditions.

In an embodiment, said structure is characterized by having wind turbines to generate electricity to charge the batteries and the trailer systems.

In an embodiment, said trailer comprises an onboard computer, GPS module and inertial measuring unit, for accurate 3D spatial localization in the autonomous electric vehicle-Trailer alignment.

In an embodiment, said trailer comprises storage compartments for tools or components for maintenance and repair works to the electric vehicle on-site.

In another embodiment, said trailer structure for electric vehicles is further characterized by being able to be carried and transported by an electric vehicle.

In another embodiment, said trailer structure comprises manual or autonomous levelling and stabilizing supports, actuated through electric, hydraulic, or pneumatic actuators to ensure stability when said trailer is on uneven terrain.

Said trailer for electric vehicles comprises the required electric sub-systems and components, including power amplification circuit, switching circuit, power transmission circuit, battery management circuit, thermal management circuit and power storage circuit.

In an embodiment, the thermal management circuit prevents overheating or overcooling, by controlling a coolant flow or a heating coil.

There are several advantages in the proposed solution, namely: Flexibility and Mobility: Unlike fixed charging stations, a movable battery swap trailer offers unparalleled flexibility. It can be easily relocated to strategic locations, ensuring access to charging services precisely where and when they are needed most. This mobility enables a fast adaptation to changing demands and reach a broader user base.

Reduced Downtime: With traditional charging stations, users often face downtime while waiting for their electric vehicles (EVs) to recharge. A battery swap trailer eliminates this inconvenience by enabling a quick and seamless battery exchange process. As a result, a user can get back on the road swiftly, enhancing their overall experience and satisfaction.

Optimized Charging Process: The battery swap station employs a well-optimized, automated system that streamlines the battery replacement procedure. This efficiency not only saves time but also reduces operational costs and ensures a continuous flow of services for users.

Extended Service Hours: By employing a movable battery swap station, one can extend your service hours beyond the limitations of traditional charging stations. This round-the-clock accessibility caters to the needs of a broader user base, including those with urgent charging requirements.

Scalability and Expansion: As a charging network grows, one can easily scale up by deploying additional movable battery swap stations. The modular nature of this solution facilitates smooth expansion without major infrastructure investments.

Enhanced Sustainability: Battery swapping promotes sustainable practices by facilitating the use of renewable energy sources. Green energy options could be integrated into the battery charging process.

In conclusion, a movable battery swap station presents numerous advantages ranging from increased flexibility and reduced downtime to enhanced sustainability and competitive differentiation.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] IQ 200-M. Mobile EV charging station, Blink Charging Co. URL: https://blinkcharging.com/products/mobile-charger/

[2] NIO's Newest Generation Power Swap Station 2.0. 26 October 2021. NIO. URL: https://www.nio.com/blog/nios-newest-generation-power-swap-station-20

**Claims**

1.  A trailer for battery swapping of an electric vehicle comprising:

    a pair of supporting bases for elevating the electric vehicle;
    a set of rolling supports for supporting a battery being displaced;
    a lift table for lifting a battery to a battery slot from the top of the set of the rolling supports and for lowering a battery from the battery slot to the top of the set of the rolling supports;
    a linear guide rail for guiding horizontally the lift table;
    a battery for being placed into the electric vehicle;
    a power charger for charging a discharged battery;
    a mobile platform for carrying the pair of supporting bases and the linear guide rail;
    wherein the lift table is placed between the pair of supporting bases;
    wherein the lift table comprises two side walls configured to push a battery;
    wherein the vertical distance from the set of rolling supports to the bottom of the electric vehicle is at least the height of the battery;
    wherein the linear guide rail comprises a threaded rod and motor for moving the lift table.

2.  Trailer according to the previous claim further comprising at least a pair of motorized pads installed at an end of the lifting table for aligning a charged battery in a battery slot.

3.  Trailer according to claim 2 wherein the motorized pads cover a total area of at least 20% of the battery's bottom surface.

4.  Trailer according to any of the previous claims wherein the set of rolling supports are placed next a supporting base or fixed to the interior surface of a supporting base.

5.  Trailer according to any of the previous claims wherein the power charger further comprises locking means for securing a battery.

6.  Trailer according to any of the previous claims wherein the lift table is a scissor lift table.

7.  Trailer according to any of the previous claims wherein the lift table further comprises a set of optical sensors, preferably laser sensors.

8.  Trailer according to any of the previous claims comprising at least one electrical power generator, preferably a solar panel, a wind turbine, or a combination of these.

9.  Trailer according to any of the previous claims further comprising a motor, a set of wheels and an axel to drive the set of wheels, preferably the motor is an electrical motor.

10. Trailer according to the previous claim wherein the at least one electrical power generator powers the electrical motor, preferably via a backup battery.

11. Trailer according to any of the previous claims wherein the mobile platform is towable by a vehicle, preferably via a tow hitch.

12. Method of operation of a trailer for battery swapping of an electric vehicle comprising the steps:

placing an electric vehicle on top of a pair of supporting bases;
rising a lift table up to a vehicle's battery bottom;
receiving the battery from the electric vehicle's chassis;
lowering the lift table up to the rolling supports level;
pushing the vehicle's battery up to an end of the rolling supports;
leaving the vehicle's battery at said end;
moving the lift table up to the power charger;
disconnect a charged battery from the power charger;
pushing the charged battery up to a battery slot of the electric vehicle;
rising the lift table with the charged battery up to the battery slot of the electric vehicle;
engaging the charged battery with the electric vehicle's chassis;
lowering the lift table up to the rolling supports level;
moving the lift table up to the end of the rolling supports;
pushing the battery up to the power charger;
charging the battery.

13. Method according to the previous claim further comprising the steps:

moving the two pads synchronously, in the same direction, after the battery is loaded in the lift table and the lift table is in a middle height position; and/or
rotating the battery by a fixing pad and moving another pad or moving two pads in opposing directions.

14. Method according to any of the previous claims 12-13 further comprising the steps:
detecting the position of the discharged battery on the vehicle's battery bottom in relation to the lift table;
if mismatched: aligning the lift table with the discharged battery; receiving the battery from the electric vehicle's chassis; aligning the lift table with the rolling supports; and aligning the lift table with the charged battery to the vehicle's battery bottom.

**Fig. 1**

**Fig. 2**

**Fig. 3**

**Fig. 4**

A

B

**Fig. 5**

A

B

**Fig. 6**

**Fig. 7A**

**Fig. 7B**

**Fig. 7C**

**Fig. 7D**

**Fig. 7E**

**Fig. 7F**

**Fig. 7G**

**Fig. 7H**

**Fig. 7I**

**Fig. 7J**

**Fig. 8A**

—32

—31

**Fig. 8B**

**Fig. 9A**

**Fig. 9B**

**Fig. 10**

Fig. 11A

Fig. 11B

**Fig. 11C**

122

121

125

123

**Fig. 12A**

124

**Fig. 12B**

Europäisches
Patentamt
European
Patent Office
Office européen
des brevets

# EUROPEAN SEARCH REPORT

**Application Number**

EP 25 19 9776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/307068 A1 (GAFFOGLIO ERIC ORLANDO [US] ET AL) 29 October 2015 (2015-10-29) * paragraphs [0018], [0046], [0051], [0054], [0056], [0063] * * figures 33, 34, 35, 45, 46, 47 * | 1-14 | INV. B60L53/30 B60K1/04 B60L53/51 B60L53/52 B60L53/80 |
| Y | CN 217 102 897 U (NINGBO JIANG CHEN AUTOMATION EQUIPMENT CO LTD) 2 August 2022 (2022-08-02) * paragraph [0004] * | 1-14 | B60S5/06 B65G15/00 B66F11/04 |
| A | US 2016/311357 A1 (ORTIZ LUIS M [US] ET AL) 27 October 2016 (2016-10-27) * paragraphs [0009], [0012] * | 8 | |
| A | US 2011/074132 A1 (BANWART DONALD D [US]) 31 March 2011 (2011-03-31) * paragraph [0072] * | 9,10 | |

**TECHNICAL FIELDS SEARCHED (IPC)**

B60L
B60K
B65G
B60S
B66F

The present search report has been drawn up for all claims

| Place of search | Date of completion of the search | Examiner |
|---|---|---|
| The Hague | 28 October 2025 | Wirth, Sebastian |

EPO FORM 1503 03.82 (P04C01)

## ANNEX TO THE EUROPEAN SEARCH REPORT
## ON EUROPEAN PATENT APPLICATION NO.

EP 25 19 9776

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2025

| Patent document cited in search report | | Publication date | Patent family member(s) | | Publication date |
|---|---|---|---|---|---|
| US 2015307068 | A1 | 29-10-2015 | US | 2015307068 A1 | 29-10-2015 |
| | | | US | 2017259675 A1 | 14-09-2017 |
| CN 217102897 | U | 02-08-2022 | NONE | | |
| US 2016311357 | A1 | 27-10-2016 | US | 2016311357 A1 | 27-10-2016 |
| | | | US | 2018101926 A1 | 12-04-2018 |
| | | | US | 2020219219 A1 | 09-07-2020 |
| US 2011074132 | A1 | 31-03-2011 | NONE | | |

EPO FORM P0459

For more details about this annex : see Official Journal of the European Patent Office, No. 12/82